# FASCICULE DE BREVET EUROPEEN

(11) **EP 1 412 913 B1**
(45) Date de publication et mention de la délivrance du brevet: **31.08.2011**
(21) Numéro de dépôt: 02794616.9
(22) Date de dépôt: 30.07.2002
(51) Int. Cl.: G06K 19/00

(54) **PROCEDE DE FABRICATION D'UN ARTICLE COMPORTANT AU MOINS UNE PUCE ELECTRONIQUE**
VERFAHREN ZUR HERSTELLUNG EINES ARTIKELS MIT MINDESTENS EINEM SILIZIUMCHIP
METHOD FOR MAKING AN ARTICLE COMPRISING AT LEAST A SILICON CHIP

(30) Priorité: 30.07.2001 FR 0110178
(43) Date de publication de la demande: 28.04.2004
(60) Demande divisionnaire: 10179408.9
(73) Titulaire: Arjo Wiggins Security SAS, 92130 Issy les Moulineaux (FR)
(72) Inventeur: RANCIEN, Sandrine, F-38140 La Murette (FR); TERLISKA, Jacques, F-38960 Saint-aupre (FR)
(74) Mandataire: Tanty, François
(86) Numéro de dépôt international: PCT/FR2002/002742
(87) Numéro de publication internationale: WO 2003/015016

(56) Documents cités:
- WO-A-00/39391
- DE-A- 19 601 358

## Description

La présente invention a notamment pour objet un procédé de fabrication d'un article comportant une couche fibreuse et au moins une puce électronique.

La demande internationale WO 99/54842 décrit un billet de banque en papier muni d'un fil de sécurité comportant une puce électronique en polymère organique semiconducteur. Ce fil de sécurité comporte des parties métallisées afin de permettre un contact direct avec un appareil de lecture des données mémorisées dans la puce, pour l'alimentation en courant de celle-ci. Aucune indication n'est donnée sur la manière de fabriquer le billet.

On connaît par la demande de brevet allemand DE 198 33 746 un chèque de voyage obtenu en disposant une bande en matière polymère comportant une puce électronique sur une première couche de papier et en rapportant sur cette dernière une deuxième couche de papier, de manière à ce que la bande en polymère soit prise en sandwich entre les deux couches. Du fait de la présence de la bande précitée entre les deux couches, l'article présente une surépaisseur le long de celle-ci.

La demande de brevet allemand DE 196 01 358 décrit un article en papier comportant, noyé dans sa masse, un micromodule constitué d'un circuit intégré et d'un support métallique.

On connaît par la demande de brevet allemand DE 196 30 648 un billet de banque comportant une bande de sécurité interrompue et une puce électronique disposée entre deux portions de cette bande.

La présente invention vise à proposer un nouveau procédé de fabrication d'un article présentant une sécurité renforcée, comportant au moins une structure fibreuse et au moins une puce électronique, notamment un article dans lequel le risque que la puce électronique puisse être enlevée sans détérioration de l'article est réduit et dans lequel la puce électronique est difficilement repérable.

L'invention a ainsi pour objet un procédé de fabrication d'un article comportant une couche fibreuse et au moins une puce électronique, la couche fibreuse étant formée par dépôt de fibres sur une surface immergée dans une dispersion de matière fibreuse, ce procédé étant caractérisé par le fait qu'il comporte l'étape suivante :
- amener au contact de la couche fibreuse en formation la puce électronique au moyen d'un support flexible de forme allongée.

Dans l'invention, le support et la puce peuvent être liés à la couche fibreuse sans création d'une surépaisseur sensible, ce qui rend la puce difficilement détectable.

En outre, la puce ne peut pas être enlevée sans détériorer l'article, car elle est solidaire du support et ce dernier est pris dans la masse de la couche fibreuse, pouvant être recouvert entièrement sur ses deux faces par les fibres de cette dernière.

Le support est avantageusement revêtu, de préférence sur ses deux faces, d'un vernis thermoscellable, qui améliore sa tenue au sein de la couche fibreuse.

La puce peut être disposée sur une surface externe du support, sans être encastrée dans celui-ci.

Le support peut présenter une largeur comprise entre 1 et 50 mm, notamment 1 et 10 mm, par exemple. Il peut être électroconducteur sauf au niveau de la puce éventuellement, être métallique ou non, métallisé ou non, éventuellement partiellement métallique ou métallisé. Lorsque la puce doit être reliée à une antenne réalisée sur le support, cette antenne permettant un fonctionnement sans contact de la puce, le support sera non conducteur au moins par endroits afin de ne pas court-circuiter l'antenne ou des contacts de la puce. Le support pourra ainsi être non électroconducteur au moins à l'endroit de la puce.

Dans un exemple de mise en oeuvre, le support est orienté, par rapport à la surface sur laquelle se déposent les fibres lors de la formation de la couche fibreuse, de manière à ce que la puce se situe sur la face du support tournée du côté opposé à ladite surface. La couche fibreuse peut alors recouvrir complètement la puce et son support. Ce dernier peut être amené au contact de la couche fibreuse en formation alors qu'une certaine épaisseur de fibres s'est déjà déposée sur ladite surface, ce qui permet de noyer complètement le support et la puce dans la couche fibreuse.

En variante, le support est disposé de manière à ce que la puce puisse venir en contact avec ladite surface, de préférence avant son immersion. Ainsi, la puce peut être incorporée à la couche fibreuse tout en venant à affleurement d'une face de celle-ci. Une telle disposition est utile notamment lorsque la puce doit ultérieurement être reliée à une antenne imprimée ou transférée sur la couche fibreuse, comme cela sera précisé plus loin, ou réalisée par d'autres moyens tels que par exemple par métallisation, démétallisation ou photogravure. On peut ensuite venir recouvrir la face précitée avec au moins une autre couche, fibreuse ou non fibreuse, de manière à ce que le support et la puce soient finalement indétectables visuellement et au toucher.

La surface immergée précitée peut être définie par la portion immergée d'une toile partiellement immergée, notamment la portion immergée d'un cylindre de toile rotatif d'une machine papetière à forme ronde, partiellement immergé.

Dans un exemple de mise en oeuvre, la puce est reliée à une antenne comportant au moins une spire. L'antenne peut être portée par le support utilisé pour amener la puce dans la dispersion de fibres papetières. L'antenne peut notamment s'étendre autour de la puce sur le support. L'antenne peut encore être disposée entièrement sur la puce ou s'étendre au moins partiellement sur le support,

Le support et la puce peuvent aussi être dépourvus d'antenne. On peut notamment réaliser l'antenne, après formation de la couche fibreuse, en imprimant sur une face de la couche fibreuse une ou plusieurs spires, de préférence par sérigraphie, au moyen d'une encre conductrice.

On peut en particulier réaliser l'antenne au moyen d'un procédé comportant les étapes suivantes :
- réaliser au moyen d'une encre conductrice sur une face de la couche fibreuse une série de spires,
- réaliser, au-dessus des spires, un pont isolant au moyen d'une encre isolante,
- réaliser sur le pont isolant une piste conductrice reliée à l'une des extrémités des spires, au moyen d'une encre conductrice, et
- connecter la puce à la piste conductrice et à l'autre extrémité des spires au moyen d'une résine conductrice.

L'antenne peut encore être réalisée par gravure ou transfert.

L'antenne peut jouer le rôle d'une bobine d'induction, présentant des dimensions supérieures aux dimensions de la puce, afin de permettre une détection de proximité ou de voisinage, de portée comprise par exemple entre 1 et 70 cm environ.

L'antenne peut aussi comme indiqué plus haut être directement réalisée sur la puce, notamment lorsqu'une détection à courte distance, de portée comprise entre 1 mm et 1 cm environ, suffit.

Les puces peuvent être à base de silicium.

Les puces utilisées peuvent permettre uniquement la lecture de données ou, en variante, permettre à la fois la lecture et l'écriture des données.

La lecture et l'écriture sur la puce peuvent être sécurisées au moyen d'un mot de passe. Les données transmises peuvent être cryptées. La puce peut encore comporter un système dit d'anti-collision, notamment dans le cas où plusieurs puces seraient présentes simultanément dans le champ de l'appareil de lecture sans contact.

Les puces peuvent comporter un micro-contrôleur programmable.

Dans une mise en oeuvre particulière de l'invention, le support, l'antenne ou la puce, notamment un vernis ou un encapsulage de la puce, peuvent comporter des éléments d'authentification choisis de manière à ne pas perturber le fonctionnement de la puce. Ces éléments d'authentification peuvent être des composés magnétiques, opaques ou visibles en transmission, des composés luminescents sous lumière visible, ultraviolette ou infrarouge, notamment proche infrarouge, ou des biomarqueurs, cette liste n'étant pas limitative.

Avantageusement, l'épaisseur de la couche fibreuse et la nature de la matière la constituant sont choisies de manière à protéger la puce et l'antenne vis-à-vis des chocs liés au traitement de la couche fibreuse pour réaliser l'article et à l'utilisation de celui-ci.

La couche fibreuse peut comporter des fibres de cellulose et/ou des fibres artificielles ou synthétiques et/ou de linters de coton.

La couche fibreuse peut être unique. En variante, la couche fibreuse comportant la puce peut être assemblée avec une deuxième couche, par exemple une autre couche fibreuse, les deux couches étant réunies par exemple par contrecollage.

Plusieurs puces et les supports associés peuvent être intégrés à la couche fibreuse simultanément, cette dernière étant ensuite découpée de manière à ne conserver qu'une seule puce par article.

Le support et la puce correspondante peuvent provenir du découpage en bandes d'un film isolant, en polyester par exemple, sur lequel on a fixé, de préférence à intervalles réguliers, les puces et éventuellement les antennes associées.

Les bandes précitées, comportant les puces, peuvent être intégrées à un jet de papier unique lors de la fabrication dudit papier, dans une machine à forme ronde, ce papier comportant des fibres de cellulose et éventuellement des fibres artificielles ou synthétiques.

Dans un exemple de mise en oeuvre de l'invention, on réalise un article comportant une couche fibreuse et au moins une puce électronique par un procédé comportant les étapes suivantes :
- introduire dans une première suspension de fibres, lors de la fabrication d'un premier jet de papier sur une machine papetière, notamment une machine ayant au moins une forme ronde, une puce au moyen d'un support flexible,
- pour chaque puce, munir le jet de papier ainsi formé d'une antenne,
- connecter Pantenne à la puce avec une résine conductrice,
- réaliser un deuxième jet de papier au moyen d'une machine à table plate ou à forme ronde, avec une seconde suspension de fibres,
- contrecoller les deux jets précédemment réalisés, les puces étant situées du côté intérieur.

Dans un tel exemple, les bandes portant les puces sont dépourvues d'antennes, et sont introduites de manière partielle dans l'épaisseur du premier jet de papier de façon à ce que les puces soient directement accessibles d'un côté du jet, le reste de la bande étant noyé dans l'épaisseur du papier. L'antenne peut alors être appliquée par impression, transfert ou gravure. La puce ne crée aucune surépaisseur localisée et ne modifie donc pas l'aspect extérieur de l'article.

Selon un exemple de mise en oeuvre de l'invention, on réalise un article comportant une couche fibreuse et au moins une puce électronique par un procédé comportant les étapes suivantes :
- fournir un film ayant des propriétés d'isolant électrique au moins à l'endroit des puces et des antennes éventuelles, revêtu à intervalles, de préférence réguliers, d'antennes,
- fixer des puces sur ce film en connectant chaque puce à une antenne, les puces étant disposées à intervalles, de préférence réguliers, sur le film,
- découper le film en bandes comportant chacune un alignement de puces et d'antennes,
- introduire les bandes dans un papier formé par la réunion de deux jets, provenant chacun par exemple d'une machine à forme ronde, à double forme ou à forme ronde et plate, entre autres.

Avantageusement, le film est revêtu d'un vernis thermoscellable sur ses deux faces, pour améliorer la tenue de la bande dans la couche.

La bande portant les puces peut être introduite dans l'épaisseur du premier jet de façon à ce que les puces affleurent d'un côté de ce jet, le reste de la bande étant noyé dans l'épaisseur du papier. Le deuxième jet vient ensuite recouvrir le premier jet, du côté des puces. L'article obtenu ne présente pas de surépaisseur localisée.

Un tel article peut constituer un étui en carton, par exemple.

L'article peut également être autocollant, notamment constituer une étiquette autocollante. Une telle étiquette peut comporter une couche fibreuse intégrant la puce et recouverte d'un adhésif sur une face.

L'invention a encore pour objet un article comportant une couche fibreuse provenant d'un seul jet de papier, une bande non électroconductrice à l'endroit de la puce s'étendant continûment entre deux extrémités de l'article, une puce munie d'une antenne intégrée ou non, fixée sur ladite bande, cette dernière étant recouverte entièrement par les fibres de la couche fibreuse de même que la puce, l'article ne présentant pas de surépaisseur sensible au droit de la puce ou de la bande.

L'article peut comporter au moins deux couches dont la couche fibreuse logeant dans son épaisseur la bande et la puce collée sur celle-ci, une antenne reliée électriquement à la puce, cette antenne étant située à l'interface entre les deux couches, La puce vient à affleurement de la face de la couche fibreuse en contact avec l'autre couche.

D'autres caractéristiques et avantages de la présente invention apparaîtront à la lecture de la description détaillée qui va suivre, d'exemples de mise en oeuvre non limitatifs, et à l'examen du dessin annexé, sur lequel :
- la figure 1 illustre schématiquement une étape du procédé de fabrication d'une couche fibreuse selon un premier exemple de mise en oeuvre de l'invention,
- la figure 2 représente schématiquement et partiellement, en coupe transversale, la couche fibreuse obtenue,
- la figure 3 représente schématiquement et partiellement un étui en carton intégrant une puce,
- la figure 4 illustre schématiquement une étape du procédé de fabrication d'une couche fibreuse selon un deuxième exemple de mise en oeuvre de l'invention,
- la figure 5 représente schématiquement et partiellement, en coupe transversale, la couche fibreuse obtenue,
- la figure 6 représente schématiquement et partiellement, en coupe transversale, un article comportant deux couches fibreuses,
- la figure 7 représente schématiquement et partiellement, en perspective, une couche fibreuse sur laquelle est réalisée une antenne connectée à la puce,
- la figure 8 illustre schématiquement le contrecollage de deux couches fibreuses,
- la figure 9 illustre de manière schématique un autre procédé de fabrication et d'assemblage de deux couches fibreuses,
- la figure 10 représente schématiquement et partiellement une étiquette adhésive conforme à l'invention,
- la figure 11 représente schématiquement et partiellement un article conforme à une variante de mise en oeuvre de l'invention, et
- la figure 12 est une vue schématique et partielle d'un article conforme à une autre variante de mise en oeuvre de l'invention.

Sur le dessin, dans un souci de clarté, les proportions relatives des différents éléments représentés n'ont pas toujours été respectées, les vues étant schématiques.

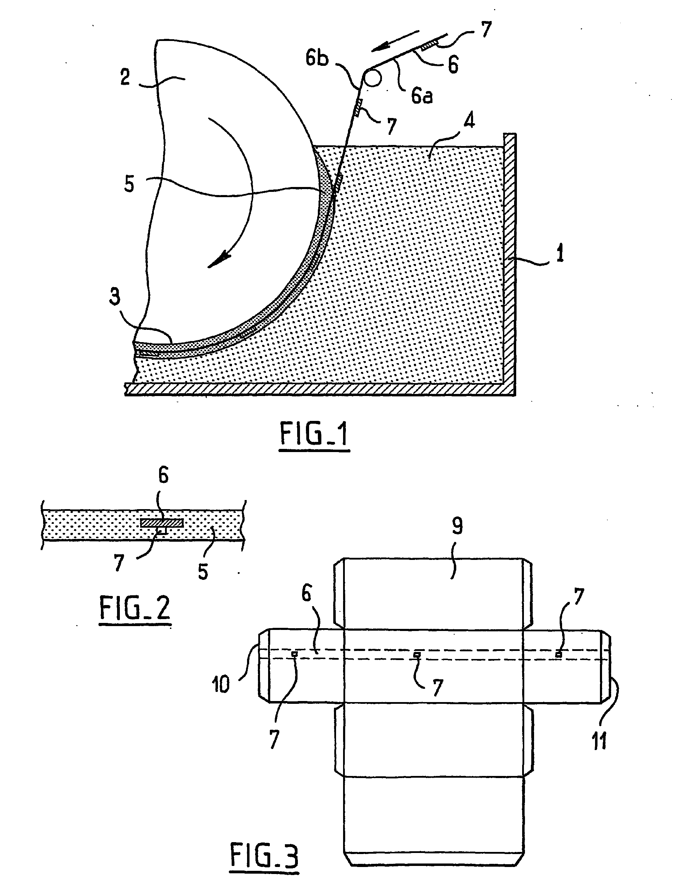

On a représenté partiellement et schématiquement sur la figure 1 une machine papetière à forme ronde. Cette machine comporte une cuve 1 contenant une suspension 4 de fibres, par exemple des fibres de cellulose et/ou des linters de coton et/ou des fibres synthétiques et/ou artificielles, dans laquelle est partiellement immergé un cylindre de toile rotatif 2 définissant une surface 3 au contact de laquelle se forme en continu une couche fibreuse 5.

On incorpore à la couche fibreuse 5, lors de sa formation, un support allongé constitué par une bande 6 portant sur une face 6a une pluralité de puces électroniques 7 disposées à intervalles réguliers. La bande 6 est encore appelée fil, sa largeur étant relativement faible, par exemple comprise entre 1 et 50 mm. Dans la présente demande, les termes "fil" et "bande" sont considérés comme étant synonymes.

Les puces 7 sont du type passif, permettant une transmission de données sans contact, chaque puce étant reliée à une antenne comportant au moins une spire et de préférence plusieurs spires.

Les puces 7 sont par exemple à base de silicium et peuvent présenter une épaisseur de 200 µm environ. L'épaisseur des puces sera choisie en fonction de l'épaisseur de la couche fibreuse.

Les antennes peuvent présenter des dimensions supérieures aux dimensions des puces, permettant ainsi une détection de proximité ou de voisinage, par exemple une détection dont la portée est comprise entre 1 et 70 cm. En variante, lorsqu'une détection à courte distance suffit, c'est-à-dire avec une portée supérieure à 1 mm mais inférieure à 1 cm environ, l'antenne peut être réalisée directement sur le substrat de la puce.

Ainsi, dans l'exemple des figures 1 et 2, les puces 7 comportent chacune une antenne intégrée. Celles-ci peuvent être des puces commercialisées sous la dénomination IC-Link^{®} par la société INSIDE TECHNOLOGIES, présentant avec l'antenne correspondante des dimensions de l'ordre de 2,2 sur 2,3 mm et une épaisseur d'environ 250 µm. Ces puces fonctionnent en modes lecture et écriture à une fréquence de 13,56 MHz et sont détectables jusqu'à 5 mm de distance.

La bande 6 est obtenue de la manière suivante.

D'abord, on fixe par collage au moyen d'une colle epoxy, cyanoacrylate ou isocyanate, une pluralité de puces 7 sur un film en polyester, ayant par exemple une épaisseur de 12 µm environ. Puis on dépose éventuellement un vernis thermoscellable pour renforcer l'adhésion dans la couche fibreuse, le vernis utilisé pouvant comporter des composés de sécurité fluorescents ou magnétiques. Ce vernis sera porté à une température suffisante lors de la fabrication de la structure, sous l'effet de la chaleur des rouleaux au contact desquels circule la couche fibreuse, par exemple. Puis le film est découpé en bandes d'une largeur chacune de 3 mm environ, les puces 7 étant disposées sur une surface de ce film de manière à être espacées de 20 cm les unes des autres sur la longueur de chaque bande 6. Les bandes 6 obtenues sont bobinées sur des cylindres dans l'attente d'être intégrées au papier.

Chaque bande 6 est incorporée dans la couche fibreuse 5 en étant amenée au contact des fibres venant de se déposer sur la surface immergée 3 du cylindre 2, comme illustré sur la figure 1.

Le côté 6b de la bande 6, dépourvu de puces 7, est tourné vers la surface 3 de la toile de manière à ce que la matière fibreuse recouvre complètement la bande 6 et les puces 7 lorsque le jet de papier quitte avec la bande 6 et les puces 7 la machine à forme ronde.

On voit sur la figure 2 que la bande 6 et les puces 7 sont complètement noyées dans la masse de la couche fibreuse 5, de sorte que la puce 7 n'est pas détectable visuellement ou au toucher et ne crée pas de surépaisseur.

La couche fibreuse 5 peut présenter une épaisseur finale de 400 µm environ et constituer un papier cartonné, par exemple.

Après séchage, la couche fibreuse 5 peut être découpée de manière à former un étui en carton 9, tel que par exemple celui représenté sur la figure 3.

On remarquera que la bande 6 s'étend continûment entre deux bords opposés 10 et 11 de l'étui 9. Ainsi, le retrait de la bande 6 ou de la puce 7 ne pourra pas se faire sans détériorer l'étui 9, la force d'adhérence de la puce 7 à la bande 6 étant très grande.

On ne sort pas du cadre de la présente invention lorsque la puce 7 n'est pas en contact direct avec une antenne configurée pour permettre par exemple d'accroître la portée de détection.

A titre d'exemple, on peut utiliser une puce configurée pour pouvoir être couplée à une antenne 15 par voie inductive.

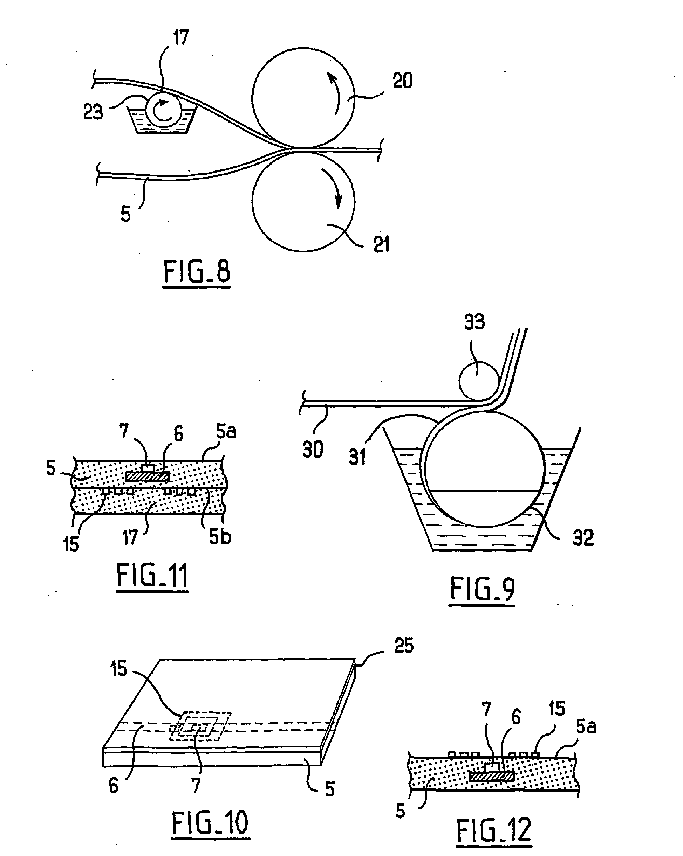

La puce est de préférence centrée par rapport à l'antenne 15, comme illustré à la figure 11.

L'antenne 15 n'étant pas directement en contact avec la puce, elle peut être réalisée par exemple sur la face 5b de la couche fibreuse 5 qui est située du côté du support 6 ou sur un autre jet.

L'antenne 15 peut présenter des dimensions nettement supérieures à celles de la puce et permettre la détection à une distance relativement importante.

L'ensemble puce et antenne ainsi obtenu peut présenter en outre de bonnes propriétés de résistance mécanique vis-à-vis des contraintes extérieures, du fait de l'absence de liaison physique entre la puce et l'antenne.

Dans l'exemple décrit, on peut utiliser des puces IC-Link^{®} mentionnées plus haut, qui comportent une antenne intégrée. Celle-ci est couplée de manière inductive à une antenne 15.

Une autre couche fibreuse 17 peut éventuellement être assemblée avec la couche fibreuse 5, comme illustré à la figure 11.

Dans un autre exemple de mise en oeuvre de l'invention, on fixe par collage sur un film, en polyester par exemple, des puces 7 initialement dépourvues d'antennes. Les puces 7 sont par exemple celles commercialisées sous la dénomination I CODE par la société PHILIPS, lesquelles fonctionnent en modes lecture et écriture à une fréquence de 13,56 MHz et sont détectables jusqu'à 1,5 m de distance, en fonction de l'antenne utilisée.

Le film est ensuite découpé en bandes 6, de 2 mm de largeur, les puces 7 étant espacées sur chaque bande de 20 cm.

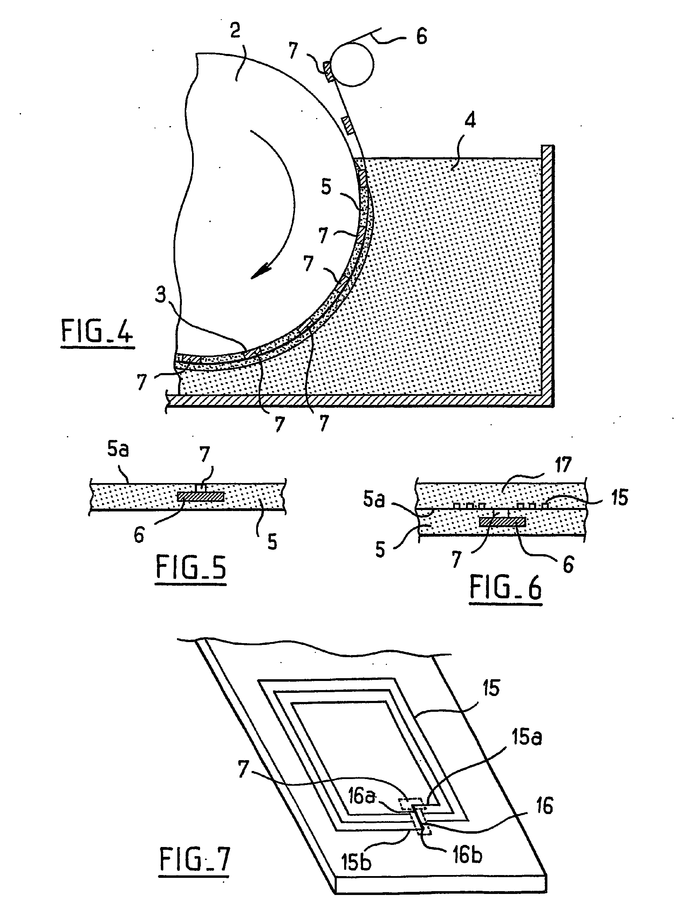

Comme illustré à la figure 4, chaque bande 6 est amenée sous tension contrôlée dans la machine à forme ronde de manière à ce que les puces 7 viennent au contact de la surface 3 de la toile avant que la matière fibreuse ne se dépose sur celle-ci. Ainsi, les puces 7 viennent à affleurement d'une face 5a de la couche fibreuse 5, comme on peut le voir sur la figure 5, tandis que le fil 6 est noyé.

On peut ensuite réaliser une antenne 15 pour chaque puce 7, de la manière suivante.

On imprime par sérigraphie sur la face 5a de la couche fibreuse 5 une série de spires au moyen d'une encre conductrice, par exemple à base d'argent. L'encre conductrice peut comporter en outre des éléments d'authentification choisis de manière à ne pas perturber le fonctionnement de la puce, tels que par exemple des composés fluorescents, excitables sous un rayonnement ultraviolet ou infrarouge, ou des biomarqueurs. Les spires imprimées comportent deux extrémités 15a et 15b, dont la première 15a est proche de la puce 7, comme on peut le voir sur la figure 7.

On imprime ensuite au moyen d'une encre isolante un pont isolant s'étendant au-dessus des spires, entre les deux extrémités 15a et 15b, et l'on réalise sur ce pont une piste conductrice 16 au moyen d'une encre conductrice, cette piste étant reliée électriquement par une extrémité 16b à l'extrémité 15b des spires. L'autre extrémité 16a de la piste 16 et l'extrémité 15a des spires sont connectées à la puce 7 au moyen d'une encre conductrice.

L'antenne 15 de l'exemple de mise en oeuvre de la figure 11 peut encore être réalisée en utilisant une encre conductrice.

En variante, l'antenne 15 décrite en référence aux figures 7 ou 11 peut être réalisée par gravure.

L'antenne 15 peut encore être mise en place autrement sur la matière fibreuse.

L'antenne 15 peut être obtenue par exemple par transfert d'un hologramme, comportant une couche métallique qui a été localement démétallisée, de manière à former des pistes conductrices, comme illustré à la figure 12.

L'antenne peut être présente sur la face externe 5a.

Ainsi, l'antenne 15 peut également constituer un élément de sécurité, grâce aux propriétés de variabilité optiques présentées par l'hologramme.

L'antenne 15 peut encore être réalisée par transfert d'un motif d'un métal, par exemple du cuivre.

L'antenne 15 peut encore être réalisée en effectuant un dépôt électrolytique par exemple d'un métal sur un support comportant préalablement une impression d'une encre conductrice formant le motif de l'antenne. Ce support est ensuite assemblé, par contre-collage ou laminage par exemple, avec la couche fibreuse qui porte la puce.

En revenant à l'exemple de mise en oeuvre de la figure 7, une fois l'antenne 15 reliée à la puce 7, on assemble la couche fibreuse 5 avec une deuxième couche 17, par exemple une couche fibreuse présentant une épaisseur de 100 µm environ, recouvrant la face 5a.

L'assemblage de deux couches fibreuses 5 et 17 est réalisé par exemple par contrecollage à l'aide de colle déposée par un rouleau 23 entre deux cylindres 20 et 21 d'une contrecolleuse, comme illustré sur la figure 8, le papier obtenu présentant par exemple une épaisseur totale de 400 µm et pouvant être découpé de manière à former un étui tel que celui représenté à la figure 3.

Comme dans l'exemple précédent, l'étui obtenu ne présente aucune sùrépaisseur sensible dans la zone où se situent la bande 6 et la puce 7, lesquelles sont indétectables visuellement ou au toucher.

Dans un autre exemple de mise en oeuvre de l'invention, le support 6 est constitué par une bande en polyester présentant une épaisseur de 90 µm et une largeur de 4 cm. Les puces 7 qui sont fixées sur cette bande 6 sont par exemple identiques à celles de l'exemple précédent. Les antennes peuvent être imprimées ou transférées sur le support, et reliées électriquement chacune à une puce. Les antennes peuvent également être réalisées par métallisation, démétallisation ou photogravure.

Dans cet exemple, on réalise dans une machine à deux formes rondes une première couche fibreuse 30 dans laquelle on incorpore la bande 6 de manière à ce que les puces 7 viennent à affleurement d'une face de la couche fibreuse, en procédant comme décrit en référence à la figure 4.

L'épaisseur du premier jet de papier est de 400 µm environ, par exemple.

Un deuxième jet de papier 31 est réalisé en parallèle, de 100 µm d'épaisseur par exemple, et les deux jets 30 et 31 sont assemblés à l'état humide par passage entre le cylindre de toile servant à la formation du deuxième jet 31 et un rouleau 33, le deuxième jet 31 venant recouvrir les puces 7, comme illustré sur la figure 9.

Le carton obtenu est séché sur la machine à papier à une température de 100°C environ et présente une épaisseur de 500 µm. Comme dans les exemples précédents, les puces 7 ne sont pas détectables visuellement ou au toucher.

Dans un autre exemple de mise en oeuvre de l'invention, après l'étape d'incorporation des puces à la couche fibreuse 5, illustrée à la figure 4 et de réalisation des antennes par sérigraphie, au lieu d'assembler la couche fibreuse 5 avec une deuxième couche fibreuse 17, on assemble cette couche fibreuse 5, après son séchage, avec une pellicule de protection 25 siliconée, recouverte sur sa face tournée vers la couche fibreuse 5 d'un adhésif sensible à la pression. La pellicule de protection 25 est destinée à être retirée au moment de l'utilisation.

La couche fibreuse 5 doublée de la pellicule de protection 25 peut être découpée de manière à former des étiquettes adhésives, telle que celle représentée à la figure 10, contenant chacune une puce 7.

La puce peut être utilisée comme élément de sécurité d'un passeport, par exemple.

Ainsi, dans un exemple de mise en oeuvre de l'invention, on colle sur une bande de 13 µm d'épaisseur une puce FLEXCHIP^{®} de 50 µm d'épaisseur, dans laquelle le silicium a été raboté afin d'en réduire l'épaisseur.

La bande est incorporée à une couche fibreuse comme dans l'exemple de réalisation précédent, puis connectée à une antenne et laminée avec de la colle sur le papier de la couverture d'un passeport.

L'invention permet de disposer d'un moyen d'authentification efficace, puisqu'une tentative de retrait de la puce se traduira inévitablement par une altération visible de l'article.

De plus, la couche fibreuse dans laquelle est intégrée la puce contribue à la protéger des chocs.

Bien entendu l'invention n'est pas limitée aux exemples de mise en oeuvre qui viennent d'être décrits.

La couche fibreuse peut recevoir des traitements usuels en papeterie et comporter des éléments d'infalsification et de sécurité.

La puce peut remplir des fonctions d'authentification et/ou de traçabilité.

Elle peut encore avoir une fonction antivol, lorsque sa fréquence correspond à celle des portiques de détection.

## Revendications

1. Procédé de fabrication d'un article (9) comportant une couche fibreuse (5) et au moins une puce électronique (7), la couche fibreuse étant formée par dépôt de fibres sur une surface (3) immergée dans une dispersion (4) de matière fibreuse, **caractérisé par le fait qu'**il comporte l'étape suivante :
- amener au contact de la couche fibreuse en formation la puce électronique au moyen d'un support flexible (6) de forme allongée.

2. Procédé selon la revendication 1, **caractérisé par le fait que** le support (6) et la puce (7) sont intégrés à la couche fibreuse (5) sans création d'une surépaisseur.

3. Procédé selon l'une des revendications précédentes, **caractérisé par le fait que** le support (6) est non électroconducteur à l'endroit de la puce (7) au moins.

4. Procédé selon l'une quelconque des revendications précédentes, **caractérisé par le fait que** le support (6) présente une largeur comprise entre 1 et 50 mm, notamment entre 1 et 10 mm.

5. Procédé selon l'une quelconque des revendications précédentes, **caractérisé par le fait que** le support (6) est recouvert entièrement par les fibres de ladite couche fibreuse (5).

6. Procédé selon l'une quelconque des revendications précédentes, **caractérisé par le fait que** le support (6) est revêtu de préférence sur ses deux faces, d'un vernis thermoscellable.

7. Procédé selon l'une quelconque des revendications précédentes, **caractérisé par le fait que** le support (6) est orienté, par rapport à la surface (3) sur laquelle se déposent les fibres lors de la formation de la couche fibreuse (5), de manière à ce que la puce (7) se situe sur la face (6a) du support tournée du côté opposé à ladite surface.

8. Procédé selon l'une quelconque des revendications 1 à 6, **caractérisé par le fait que** le support (6) est disposé de manière à ce que la puce (7) puisse venir en contact avec ladite surface (3), de préférence avant son immersion.

9. Procédé selon la revendication 8, **caractérisé par le fait que** la puce (7) vient à affleurement d'une face (5a) de ladite couche fibreuse (5).

10. Procédé selon la revendication précédente, **caractérisé par le fait que** ladite face (5a) est recouverte avec une autre couche (17), fibreuse ou non, de manière à ce que le support (6) et la puce soient indétectables visuellement et au toucher.

11. Procédé selon l'une quelconque des revendications précédentes, **caractérisé par le fait que** ladite surface (3) est définie par la portion immergée d'un cylindre de toile rotatif d'une machine papetière à forme ronde, partiellement immergé.

12. Procédé selon l'une quelconque des revendications précédentes, **caractérisé par le fait qu'**une pluralité de puces (7) est fixée sur le support (6), notamment par collage.

13. procédé selon l'une quelconque des revendications précédentes, **caractérisé par le fait que** le support (6) est réalisé par découpage en brandes (6) d'un film sur lequel ont été collées des puces (7), ces dernières étant réparties sur le film de manière à être espacées régulièrement sur lesdites bandes.

14. Procédé selon l'une quelconque des revendications précédentes, **caractérisé par le fait que** la puce (7) est reliée à une antenne (15) comportant au moins une spire.

15. Procédé selon la revendication précédente, **caractérisé par le fait que** l'antenne (15) est portée par le support (6) utilisé pour amener la puce (7) dans la dispersion de fibres papetières.

16. Procédé selon la revendication précédente, **caractérisé par le fait que** l'antenne (15) s'étend autour de la puce (7) sur le support (6).

17. Procédé selon l'une quelconque des revendications 1 à 13, **caractérisé par le fait que** l'antenne (15) est disposée sur la puce (7) elle-même.

18. Procédé selon l'une quelconque des revendications 1 à 13, **caractérisé par le fait que** le support (6) et la puce (7) sont dépourvus d'antenne.

19. Procédé selon la revendication précédente, **caractérisé par le fait que** l'on réalise l'antenne (15) sur la couche fibreuse (5) après formation de cette dernière.

20. Procédé selon la revendication 19, **caractérisé par le fait que** l'on réalise l'antenne (15) au moyen d'un procédé comportant les étapes suivantes :
réaliser au moyen d'une encre conductrice sur une face de la couche fibreuse (5) une série de spires,
- réaliser au-dessus des spires un pont isolant au moyen d'une encre isolante,
- réaliser sur le pont isolant une piste conductrice (16) reliée à l'une (15b) des extrémités des spires au moyen d'une encre conductrice, et
- connecter la puce (7) à la piste conductrice et à l'autre extrémité (15a) des spires au moyen d'une résine conductrice.

21. Procédé selon l'une quelconque des revendications précédentes, **caractérisé par le fait que** la puce (7) est à base de silicium.

22. Procédé selon l'une quelconque des revendications précédentes, **caractérisé par le fait que** la puce (7) permet la transmission, de données sans contact.

23. Procédé selon l'une quelconque des revendications précédentes, **caractérisé par le fait que** le support (6) est en polyester.

24. Procédé selon l'une quelconque des revendications 1 à 23, **caractérisé par le fait que** la couche fibreuse (5) est unique.

25. Procédé selon l'une quelconque des revendications 1 à 23, **caractérisé par le fait que** l'article (9) comporte au moins deux couches fibreuses superposées, assemblées par contrecollage, l'une des deux comportant la puce (7).

26. Procédé selon la revendication 1, **caractérisé par le fait qu'**il comporte les étapes suivantes :
- introduire dans une première suspension de fibres, lors de la fabrication d'un premier jet de papier sur une machine papetière, une puce (7) au moyen d'un support (6) flexible, les bandes portant les puces étant dépourvues d'antennes et étant introduites de manière partielle dans l'épaisseur du premier jet de papier de façon à ce que les puces soient directement accessibles d'un côté du jet, le reste de la bande étant noyé dans l'épaisseur du papier,
- pour chaque puce, munir le jet de papier ainsi formé d'une antenne (15),
- connecter l'antenne à la puce avec une résine conductrice,
- réaliser un deuxième jet de papier au moyen d'une machine à table plate ou à forme ronde, avec une seconde suspension de fibres,
- contrecoller les deux jets précédemment réalisés, les puces étant situées du côté intérieur.

27. Procédé selon la revendication 1, **caractérisé par le fait qu'**il comporte les étapes suivantes :
- fournir un film ayant des propriétés d'isolant électrique au moins à l'endroit des puces et des antennes éventuelles, revêtu à intervalles, de préférence réguliers, d'antennes (15),
- fixer des puce (7) sur ce film en connectant chaque puce à une antenne, les puces étant disposées à intervalles, de préférence réguliers, sur le film,
- découper le film en bandes comportant chacune un alignement de puces et d'antennes,
- introduire les bandes dans un papier formé par la réunion de deux jets, la bande portant les puces étant introduite dans l'épaisseur du premier jet de façon à ce que les puces affleurent d'un côté de ce jet, le reste de la bande étant noyé dans l'épaisseur du papier, le deuxième jet venant recouvrir le premier jet, du côté des puces.

28. Procédé selon la revendication précédente, **caractérisé par le fait que** le film est revêtu d'un vernis thermoscellable sur ses deux faces.

29. Procédé selon l'une quelconque des revendications précédentes, **caractérisé par le fait que** l'un au moins du support (6), de la puce (7), notamment un vernis ou un encapsulage de celle-ci, ou d'une antenne (15) éventuelle, comporte au moins un élément d'authentification.

30. Procédé selon la revendication précédente, **caractérisé par le fait que** l'élément d'authentification est choisi parmi des composés magnétiques, opaques ou visibles en transmission, des composés luminescents sous lumière visible, ultraviolette ou infrarouge, notamment proche infrarouge, notamment des biomarqueurs.

31. Article (9) **caractérisé par le fait qu'**il comporte une couche fibreuse (5) provenant d'un seul jet de papier, une bande (6) non électroconductrice au moins à l'endroit des puces s'étendant continûment entre deux extrémités de l'article, une puce (7) fixée sur ladite bande, cette dernière étant recouverte entièrement par les fibres de la couche fibreuse de même que la puce, l'article ne présentant pas de surépaisseur au droit de la puce ou de la bande.

32. Article (9) selon la revendication 31, **caractérisé par le fait qu'**il comporte au moins deux couches dont la couche fibreuse logeant dans son épaisseur la bande (6) et la puce (7) collée sur celle-ci, une antenne (15) reliée électriquement à la puce, cette antenne étant située à l'interface entre les deux couches, la puce venant à affleurement de la face de la couche fibreuse en contact avec l'autre couche.

## Claims

1. A method of manufacturing an article (9) comprising a fiber layer (5) and at least one electronic chip (7), the fiber layer being formed by depositing fibers on a surface (3) immersed in a dispersion (4) of fiber material, and the method being **characterized by** the fact that it includes the following step:
• using an elongate flexible support (6) to bring the electronic (5) chip into contact with the fiber layer that is being formed.

2. A method according to claim 1, **characterized by** the fact that the support (6) and the chip (7) are integrated in the fiber layer (5) without giving rise to extra thickness.

3. A method according to either preceding claim, **characterized by** the fact that the support (6) does not conduct electricity, at least in the location of the chip (7).

4. A method according to any preceding claim, **characterized by** the fact that the width of the support (6) lies in the range 1 mm to 50 mm, and in particular in the range 1 mm to 10 mm.

5. A method according to any preceding claim, **characterized by** the fact that the support (6) is covered completely by fibers of said fiber layer (5).

6. A method according to any preceding claim, **characterized by** the fact that the support (6) is preferably coated on both faces in a heat-sealable varnish.

7. A method according to any preceding claim, **characterized by** the fact that the support (6) is oriented relative to the surface (3) on which the fibers are deposited during formation of the fiber layer (5) in such a manner that the chip (7) is situated on the face (6a) of the support that faces away from said surface.

8. A method according to any one of claims 1 to 6, **characterized by** the fact that the support (6) is placed in such a manner that the chip (7) can come into contact with said surface (3), preferably prior to being immersed.

9. A method according to claim 8, **characterized by** the fact that the chip (7) lies flush with one of the faces (5a) of said fiber layer (5).

10. A method according to the preceding claim, **characterized by** the fact that said face (5a) is covered by another optionally fibrous layer (17) so that the support (6) and the chip (7) are undetectable visually and to the touch.

11. A method according to any preceding claim, **characterized by** the fact that said surface (3) is defined by the immersed portion of a partially immersed rotary wire cylinder of a cylinder machine.

12. A method according to any preceding claim, **characterized by** the fact that a plurality of chips (7) are fixed on the support (6), in particular by adhesive.

13. A method according to any preceding claim, **characterized by** the fact that the support (6) is made by cutting up into strips (6) of a film on which chips (7) have been stuck, the chips being distributed on the film in such a manner as to be regularly spaced apart on said strips.

14. A method according to any preceding claim, **characterized by** the fact that the chip (7) is connected to an antenna (15) comprising at least one turn.

15. A method according to the preceding claim, **characterized by** the fact that the antenna (15) is carried by the support (6) used for bringing the chip (7) into the dispersion of papermaking fibers.

16. A method according to the preceding claim, **characterized by** the fact that the antenna (15) extends around the chip (7) on the support (6).

17. A method according to any one of claims 1 to 13, **characterized by** the fact that the antenna (15) is disposed on the chip (7) itself.

18. A method according to any one of claims 1 to 13, **characterized by** the fact that the support (6) and the chip (7) do not have any antenna.

19. A method according to the preceding claim, **characterized by** the fact that the antenna (15) is made on the fiber layer (5) after said layer has been formed.

20. A method according to claim 19, **characterized by** the fact that the antenna (15) is made by means of a method comprising the following steps:
• using a conductive ink to make a series of turns on one face of the fiber layer (5);
• using an insulating ink to make an insulating bridge over the turns;
• using a conducive ink to make a conductive track (16) on the bridge, the track being connected to one of the ends (15b) of the turns; and
• using a conductive resin to connect the chip (7) to the conductive track and to the other end (15a) of the turns.

21. A method according to any preceding claim, **characterized by** the fact that the chip is based on silicon.

22. A method according to any preceding claim, **characterized by** the fact that the chip (7) enables data to be transmitted without contact.

23. A method according to any preceding claim, **characterized by** the fact that the support (6) is made of polyester.

24. A method according to any one of claims 1 to 23, **characterized by** the fact that the fiber layer (5) is the only fiber layer.

25. A method according to any one of claims (9) 1 to 23, **characterized by** the fact that the article comprises at least two superposed fiber layers, assembled together by lamination, one of the layers including the chip (7).

26. A method according to claim 1, **characterized by** the fact that it comprises the following steps:
• using a flexible support to introduce a chip (7) into a first suspension of fibers while making a first web of paper in a papermaking machine, the chip-carrying strips having no antennas and being introduced partway through the thickness of the first web of paper so that the chips are directly accessible on one side of the web, the remainder of the chip being embedded in the thickness of the paper;
• providing the resulting web of paper with an antenna (15) for each chip;
• using a conductive resin to connect the antenna to the chip; a
• using a second suspension of fibers to make a second web of paper by means of an endless wire machine or a cylinder machine; and
• laminating the two previously-made webs together with the chips situated on the inside.

27. A method according to claim 1, **characterized by** the fact that it comprises the following steps:
• providing a film having electrically insulating properties at least in the locations of chips and any antennas, the film being provided at preferably regular intervals with antennas (15);
• fixing chips (7) on the film, connecting each chip to an antenna, the chips being disposed at preferably regular intervals on the film;
• cutting the film into strips each comprising a line of chips and antennas; and
• introducing the strips into paper formed by uniting two webs, the strip carrying the chips being introduced into the thickness of the first web so that the chips are flush with one side of said web, the remainder of the strip being embedded in the thickness of the paper, the second web covering the first web beside the chips.

28. A method according to the preceding claim, **characterized by** the fact that the film is coated in a heat-sealable varnish on both faces.

29. A method according to any preceding claim, **characterized by** the fact that at least one of the support (6), the chip (7), in particular a varnish or an encapsulation, and an antenna (15) comprises authentication elements.

30. A method according to claim 29, **characterized by** the fact that said authentication elements are selected from the list consisting of: compounds that are magnetic, opaque, or visible in transmission, compounds that emit light under visible, ultraviolet or infrared, or near-infrared light, biomarkers.

31. An article (9) **characterized by** the fact that it comprises a fiber layer coming from a single web of paper, a strip (6) that is not electrically conductive at least in the locations of chips extending continuously between two ends of the article, a chip (7) being fixed on said strip, the strip being completely covered by the fibers of the fiber layer as is the chip, the article not presenting any perceptible extra thickness over the chip over the strip.

32. An article (9) according to claim 31, **characterized by** the fact that it comprises at least two layers, including the fiber layer (5) housing the strip (6) and the chip (7) stuck thereto in its thickness, an antenna (15) electrically connected to the chip, said antenna being situated at the interface between the two layers, the chip coming flush with the face of the fiber layer that is in contact with the other layer.

## Patentansprüche

1. Verfahren zur Herstellung eines Gegenstands (9) mit einer Faserschicht (5) und wenigstens einem elektronischen Chip (7), wobei die Faserschicht durch Ablagerung von Fasern auf einer Oberfläche (3), die in einer Dispersion (4) von Fasermaterial eingetaucht ist, gebildet wird, **dadurch gekennzeichnet, dass** es den folgenden Schritt umfasst:
In-Kontakt-Bringen des elektronischen Chips mit der Faserschicht während ihrer Bildung mittels eines flexiblen Trägers (6) von länglicher Form.

2. Verfahren nach Anspruch 1, **dadurch gekennzeichnet, dass** der Träger (6) und der Chip (7) in die Faserschicht (5) integriert sind, ohne dass eine Überdickung entsteht.

3. Verfahren nach einem der vorhergehenden Ansprüche, **dadurch gekennzeichnet, dass** der Träger (6) wenigstens an der Stelle des Chips (7) nicht elektrisch leitfähig ist.

4. Verfahren nach einem der vorhergehenden Ansprüche, **dadurch gekennzeichnet, dass** der Träger (6) eine Länge von zwischen 1 und 50 mm, insbesondere zwischen 1 und 10 mm, aufweist.

5. Verfahren nach einem der vorhergehenden Ansprüche, **dadurch gekennzeichnet, dass** der Träger (6) vollständig von den Fasern der Faserschicht (5) bedeckt ist.

6. Verfahren nach einem der vorhergehenden Ansprüche, **dadurch gekennzeichnet, dass** der Träger (6) vorzugsweise auf seinen zwei Seiten mit einem Heißsiegellack beschichtet ist.

7. Verfahren nach einem der vorhergehenden Ansprüche, **dadurch gekennzeichnet, dass** der Träger (6) bezüglich der Oberfläche (3), auf der sich die Fasern bei der Bildung der Faserschicht (5) ablagern, so ausgerichtet ist, dass sich der Chip (7) auf der Seite (6a) des Trägers befindet, die der Oberfläche gegenüberliegt.

8. Verfahren nach einem der Ansprüche 1 bis 6, **dadurch gekennzeichnet, dass** der Träger (6) so angeordnet ist, dass der Chip (7) mit der Oberfläche (3) in Kontakt kommen kann, vorzugsweise vor seinem Eintauchen

9. Verfahren nach Anspruch 8, **dadurch gekennzeichnet, dass** der Chip (7) bündig mit einer Seite (5a) der Faserschicht (5) liegt.

10. Verfahren nach dem vorhergehenden Anspruch, **dadurch gekennzeichnet, dass** die Seite (5a) so mit einer anderen Schicht (17), faserartig oder nicht, bedeckt ist, dass der Träger (6) und der Chip (7) weder sichtbar noch fühlbar wahrzunehmen sind.

11. Verfahren nach einem der vorhergehenden Ansprüche, **dadurch gekennzeichnet, dass** die Oberfläche (3) durch einen eingetauchten Abschnitt eines rotierenden Stoffzylinders einer Rundsieb-Papiermaschine, teilweise eingetaucht, definiert ist.

12. Verfahren nach einem der vorhergehenden Ansprüche, **dadurch gekennzeichnet, dass** mehrere Chips (7) auf dem Träger (6) befestigt sind, insbesondere durch Aufkleben.

13. Verfahren nach einem der vorhergehenden Ansprüche, **dadurch gekennzeichnet, dass** der Träger (6) durch Aufteilen eines Films, auf dem Chips (7) aufgeklebt sind, in Bänder (6) gebildet wird, wobei die Chips so über dem Film verteilt sind, dass sie auf den Bändern gleichmäßige Abstände voneinander aufweisen.

14. Verfahren nach einem der vorhergehenden Ansprüche, **dadurch gekennzeichnet, dass** der Chip (7) mit einer Antenne (15) mit wenigstens einer Windung verbunden ist.

15. Verfahren nach dem vorhergehenden Anspruch, **dadurch gekennzeichnet, dass** die Antenne (15) von dem Träger (6) getragen wird, der dazu verwendet wird, den Chip (7) in die Dispersion von Papierfasern einzubringen.

16. Verfahren nach dem vorhergehenden Anspruch, **dadurch gekennzeichnet, dass** sich die Antenne (15) um den Chip (7) herum über den Träger (6) erstreckt.

17. Verfahren nach einem der Ansprüche 1 bis 13, **dadurch gekennzeichnet, dass** die Antenne (15) auf dem Chip (7) selbst angeordnet ist.

18. Verfahren nach einem der Ansprüche 1 bis 13, **dadurch gekennzeichnet, dass** der Träger (6) und der Chip (7) keine Antenne aufweisen.

19. Verfahren nach dem vorhergehenden Anspruch, **dadurch gekennzeichnet, dass** die Antenne (15) auf der Faserschicht (5) nach deren Bildung angebracht wird.

20. Verfahren nach Anspruch 19, **dadurch gekennzeichnet, dass** die Antenne (15) mittels eines Verfahrens angebracht wird, das die folgenden Schritte aufweist:
Anbringen einer Reihe von Windungen mittels einer leitfähigen Tinte auf einer Seite der Faserschicht (5),
Anbringen einer isolierenden Brücke auf den Windungen mittels einer isolierenden Tinte,
Anbringen eines leitfähigen Pfades (16), der mit einer (15b) der Außenseiten der Windungen verbunden ist, auf der isolierenden Brücke mittels einer leitfähigen Tinte, und
Verbinden des Chips (7) mit dem leitfähigen Pfad und der anderen Außenseite (15a) der Windungen mittels eines leitfähigen Kunstharze.

21. Verfahren nach einem der vorhergehenden Ansprüche, **dadurch gekennzeichnet, dass** der Chip (7) ein Chip auf Siliziumbasis ist.

22. Verfahren nach einem der vorhergehenden Ansprüche, **dadurch gekennzeichnet, dass** der Chip (7) kontaktlose Datenübertragung erlaubt.

23. Verfahren nach einem der vorhergehenden Ansprüche, **dadurch gekennzeichnet, dass** der Träger (6) aus Polyester ist.

24. Verfahren nach einem der Ansprüche 1 bis 23, **dadurch gekennzeichnet, dass** die Faserschicht (5) einheitlich ist.

25. Verfahren nach einem der Ansprüche 1 bis 23, **dadurch gekennzeichnet, dass** der Gegenstand (9) mindestens zwei übereinandergelagerte Faserschichten aufweist, die durch gegenseitiges Verkleben zusammengesetzt sind, wobei eine der beiden den Chip (7) umfasst.

26. Verfahren nach Anspruch 1, **dadurch gekennzeichnet, dass** es die folgenden Schritte umfasst:
Einführen eines Chips (7) mittels eines flexiblen Trägers (6) in eine erste Fasersuspension bei der Herstellung eines ersten Papierstroms auf einer Papiermaschine, wobei die die Chips tragenden Bänder keine Antenne aufweisen und teilweise in der Lage des ersten Papierstroms so eingeführt werden, dass die Chips von einer Seite des Stroms direkt zugänglich sind, wobei der Rest des Bandes in der Papierlage eingebracht ist,
Versehen des so gebildeten Papierstroms für jeden Chip mit einer Antenne (15).
Verbinden der Antenne mit dem Chip mittels eines leitfähigen Kunstharzes,
Bilden eines zweiten Papierstroms mittels einer Langsiebmaschine oder einer Rundsiebmaschine mit einer zweiten Fasersuspension,
Verkleben der zwei zuvor gebildeten Ströme miteinander, wobei die Chips auf der Innenseite liegen.

27. Verfahren nach Anspruch 1, **dadurch gekennzeichnet, dass** es die folgenden Schritte umfasst:
Aufbringen eines Films mit den Eigenschaften eines elektrischen Isolierstoffs wenigstens an der Stelle von Chips und eventuellen Antennen, wobei der Film in Intervallen, vorzugsweise regelmäßigen Antennen, mit Antennen (15) beschichtet ist,
Befestigen von Chips (7) auf dem Film durch Verbinden jedes Chips mit einer Antenne, wobei die Chips in Intervallen, vorzugsweise regelmäßigen Intervallen, auf dem Film angeordnet sind,
Aufteilen des Films in Bänder, die jeweils eine ausgerichtete Anordnung von Chips und Antennen aufweisen,
Einführen der Bänder in durch die Vereinigung zweier Ströme gebildetes Papier, wobei das die Chips tragende Band so in die Lage des ersten Stroms eingeführt wird, dass die Chips auf einer Seite des Stroms erscheinen, wobei der Rest des Bandes in der Papierlage eingebracht ist, wobei der zweite Strom den ersten Strom auf der Seite der Chips bedeckt.

28. Verfahren nach dem vorhergehenden Anspruch, **dadurch gekennzeichnet, dass** der Film auf seinen zwei Seiten mit einem Heißsiegellack beschichtet ist.

29. Verfahren nach einem der vorhergehenden Ansprüche, **dadurch gekennzeichnet, dass** der Träger (6), der Chip (7), insbesondere ein Lack oder dessen Verkapselung, und/oder eine eventuelle Antenne (15) wenigstens ein Authentifikationselement umfassen.

30. Verfahren nach dem vorhergehenden Anspruch, **dadurch gekennzeichnet, dass** das Authentifikationselement ausgewählt ist aus magnetischen, undurchsichtigen oder bei der Übertragung sichtbaren Verbindungen sowie unter sichtbarem, ultraviolettem oder infrarotem, insbesondere nah-infrarotem, Licht lumineszierenden Verbindungen, insbesondere Biomarkern.

31. Gegenstand (9), **dadurch gekennzeichnet, dass** er eine aus einem einzigen Papierstrom stammende Faserschicht (5), ein nicht elektrisch leitfähiges Band (6) wenigstens an der Stelle von sich durchgehend zwischen zwei äußeren Enden des Gegenstands erstreckenden Chips, einen auf dem Band befestigten Chip (7) aufweist, wobei letzteres ganz mit Fasern der gleichen Faserschicht wie der Chip bedeckt ist, wobei der Gegenstand keine Überdickung wegen des Chips oder des Bandes aufweist.

32. Gegenstand (9) nach Anspruch 31, **dadurch gekennzeichnet, dass** er mindestens zwei Schichten, deren Faserschicht (5) in ihrer Lage das Band (6) und den Chip (7), die darauf verklebt sind, aufnimmt, eine mit dem Chip elektrisch verbundene Antenne (15) aufweist, wobei die Antenne an der Schnittstelle zwischen den zwei Schichten liegt und der Chip an der Seite der Faserschicht in Kontakt mit der anderen Schicht ausgerichtet ist.
